# EUROPEAN PATENT APPLICATION

(11) **EP 3 770 760 A1**
(43) Date of publication of application: **27.01.2021**
(21) Application number: 19187838.8
(22) Date of filing: 23.07.2019
(51) Int. Cl.: G06F 9/50

(54) **PREDICTION OF RESOURCE CONSUMPTION FOR FUNCTIONS**

(71) Applicant: Siemens Aktiengesellschaft, 80333 München (DE)
(72) Inventor: Eckl, Roland, 91301 Forchheim (DE); Klaumünzer, Patrick, 90513 Zirndorf (DE)

(57) **Abstract**

The present invention is related to a computer-implemented method of predicting a resource consumption of functions as well as a computer-implemented method of training a Machine Learning system (ML) or a Neural Network (NN) for determining weights for nodes of syntactic structures of functions and for predicting resource consumption of the functions and corresponding computer programs, computer-readable media and data processing systems. Weights for each node in a provided syntactic structure of the function are determined by a prediction module (the ML or the NN) based on characteristics of the respective nodes and the resource consumption of the function is predicted by the prediction module (the ML or the NN) based on the nodes of the provided syntactic structure and the respective determined weights.

## Description

The present invention is related to a computer-implemented method of predicting a resource consumption of functions, a corresponding computer program, a corresponding computer-readable medium and a corresponding data processing system as well as a computer-implemented method of training a Machine Learning system (ML), in particular a proof-of-concept ML with linear regression (linear least square) optimization or a Neural Network (NN), for determining weights for nodes of syntactic structures of functions and for predicting resource consumption of the functions.

In the area of Cloud and Edge computing, execution and in particular pricing is often based on the required consumption of resources. Developers are facing questions such as "how many resources do I need to run my app?" or "how much will execution of my app cost me at the end of the day?" Especially for Function-as-a-Service (FaaS) environments, where individual stateless "functions" get executed instead of long-living applications, the question of resource consumption cost is hard to answer upfront. While one may be paying for the entire uptime in case of long-lived cloud applications, the actual execution time and duration of a single function is fuzzy in calculations.

Typically, the following pricing models are in place today:
- Pay per call;
- Pay per duration;
- Pay for memory size;
- Pay for CPU type;
- Pay per CPU cycle; and
- Any combination of above (e.g. "per call + duration + memory pricing per second").
As one can already see, it is hard for customers to get an upfront quote on the expected cost. Even if the concrete function is already available, it is difficult to provide the correct assumptions for a price calculation. How much memory will really be needed at runtime for the function? How long will the function run before it reaches the end? Are there idle-times where one pays for waiting on something external?

Therefore, usually a developer will end up with several experiments and test runs to get a better gut feeling for the expected usage. Also, available manual costs calculators are just very rough estimations which can vary significantly from the actual price to be paid later.

While this is hard to narrow down for complex applications and services with multiple threads and processes, in FaaS scenarios for example the entire code is available in one place and could be analysed for a resource and thus cost analysis.

Moreover, a concededly small change in code may result in an unexpected peak in resource consumption at runtime and thus pricing. This can be a change in an algorithm or simply the update or exchange of a dependent library used in the function's code.

As of today, developers have just limited options to get information on needed resource consumption. The most obvious option is to run the code and see if everything works as expected (manual test or simulation). This often results in over- or undersized resources (e.g. purchasing more memory than needed or not enough for peaks). Further, this approach might result in several runs under different conditions for "a better gut feeling", which leads to overlong and costly testing phases. Moreover, the values of performance gained on the developer's local machine might differ a lot from the values on the real cloud or edge device on which the function will actually be executed.

For pricing this is even worse. There are price calculators available (form-based sheets) where a user can enter its assumptions for the expected needs. Without having concrete code and running manual tests, it is nearly impossible to predict how long these functions will actually run or how many resources are required for computation - the developer is forced to enter numbers by best guess or educated guess after running it on some local machine or platform test account. In post-payment, the developer is charged for resources he could not really predict nor limit in terms of a maximum. (Nothing in place like a "cost airbag" - because it is also for the platform provider unpredictable to give a reasonable price quote).

Thus, the problems of upfront estimation of resource consumption and cost for execution of functions in FaaS environments or in regular cloud computing with full-blown applications are hardly answered by these known methods.

Therefore, the object of the present invention is to overcome or at least alleviate these problems by providing a computer-implemented method of predicting a resource consumption of functions according to independent claim 1 and a computer-implemented method of training a ML or a NN for determining weights for nodes of syntactic structures of functions and for predicting resource consumption of the functions as well as corresponding computer programs, computer-readable media and data processing systems according to the further independent claims. Further refinements of the present invention are subject of the dependent claims.

According to a first aspect of the present invention a computer-implemented method of predicting a resource consumption of functions comprises the steps providing a prediction module with a syntactic structure, determining weights and predicting the resource consumption. In the step of providing the prediction module with the syntactic structure, the prediction module is provided with the syntactic structure of a source code of a function. The syntactic structure comprises different nodes each representing one entity of the function contributing to the resource consumption of the function. In the step of determining the weights, the weights for each node in the provided syntactic structure are determined by the prediction module based on characteristics of the respective nodes. In the step of predicting the resource consumption, the resource consumption of the function is predicted by the prediction module based on the nodes of the provided syntactic structure and the respective determined weights.

According to a second aspect of the present invention a computer program comprises instructions which, when the program is executed by a computer, cause the computer to carry out the steps of the method according to the first aspect of the present invention.

According to a third aspect of the present invention a computer-readable medium has stored thereon the computer program according to the second aspect of the present invention.

According to a fourth aspect of the present invention a data processing system comprises means for carrying out the steps of the method according to the first aspect of the present invention.

The functions for which the resource consumption can be predicted with the computer-implemented method can be any functions executable on data processing systems like computers (e.g. Personal Computers (PCs), Laptops, Notebooks), servers, virtual machines, Cloud systems and the like having at least one processing unit (e.g. a Central Processing Unit (CPU), Graphics Processing Unit (GPU), etc.) for executing the functions and at least one memory (e.g. Random Access Memory (RAM), etc.) for at least temporarily storing the functions and values generated during execution. In particular, the functions may be Functions as a Service. The functions may be implemented in any programming language like Java, JavaScript, Pearl, Python and the like. The functions may comprise one or more imports (where for example external libraries are included), declarations (where for example variables and/or constants are defined), instantiations (where for example the variables/constants are instantiated and/or set), instructions (where for example the data processing system is instructed to manipulate data, e.g. get data, set data, etc.) and the like.

The source code of the functions is a representation of the function in any programming language, where the imports, declarations, instantiations, instructions and the like are written in the respective programming language which can be understood by a human programmer. The source code is compiled (just-in-time) on a target hardware structure / data processing system by a corresponding compiler.

The source code of the function (or rather the function per se) has a syntactic structure. The syntactic structure resembles a logic and a workflow of the function and may therefore be regarded as a different view or model of the function. For example, the syntactic structure may be given by an Abstract Syntax Tree (AST).

The nodes of the syntactic structure may be of different types of node. A type of node may for example be a "declaration", a "statement", an "operation", a "control flow" and the like. The nodes each represent one entity of the function contributing to the resource consumption of the function.

Each node has certain characteristics that contribute to the resource consumption of the function. The nodes, depending on their type of node, their amount and their position in the syntactic structure, require a certain amount of memory for storing values and a certain amount of computational time for manipulating data. For example a node of the type "operation" may manipulate a value stored in the memory. Thereto, the processing unit needs to fetch the value from the memory, manipulate the value according to the operation (e.g. instruction) and store the manipulated value in the memory. Further, the function has certain dependencies that also contribute to the resource consumption. These dependencies may inter alia be covered by the nodes of the type "import statement".

The weight of a node gives an extent to which the respective node will add to the total resource consumption of the function when executed.

The resource consumption comprises one or more values (also, but not exclusively, quantitative values, e.g. "low", "medium", "high") that indicate how much resources, in particular how much memory and computing power of a processing unit, will be used for executing the function (on a predetermined hardware/data processing system).

In the step of providing the prediction module with the syntactic structure, the syntactic structure (e.g. an AST) of the (source code of the) function, for which the resource consumption has to be predicted is forwarded to the prediction module. The syntactic structure may have been generated in advance for example by another module of the data processing system comprising the prediction module or by another data processing system. The provided syntactic structure comprises the nodes representing the entities of the function which contribute to the resource consumption of the function.

In the step of determining the weights, the prediction module determines the weights for each node in the provided syntactic structure. Thereby, the weights are determined based on the characteristics of the respective nodes. Thus, each node resembles an entity of the function that will contribute in a certain amount to the resource consumption of the whole function. Depending on said characteristics of each node, thus, the corresponding weights are determined by the prediction module. For example, a (linear) function, a look up table and the like or a Machine Learning system (ML) or a Neural Network (NN) may be used to assign a weight to each node. In the step of predicting the resource consumption, the prediction module predicts the resource consumption of the function. The prediction of the resource consumption is based on the nodes (e.g. total amount and types of node) of the provided syntactic structure and the respective determined weights. Thus, based on the determined weights and the amount of nodes the resource consumption is predicted by the prediction module. For example, the weights of each node may be summed up to a total weight and correlated to a resource consumption on a predefined hardware (data processing system) via a (linear) function, a look up table and the like.

Consequently, the predicted resource consumption (on a predefined hardware) of the function takes into account the syntactic structure of the function or rather the nodes of the syntactic structure. With the present invention, the resource consumption can be reliably and accurately predicted, as the predicted resource consumption of the function is based on the internal structure of the function and not a mere observation of its behaviour on an arbitrary testing system or a common estimation. Further, in case of an update of the function or an external library used in the function the present invention provides for an upfront analysis of the actual updated source code of the function and uncovers changes in resource consumption resulting in a different cost target before the updated function is rolled out.

According to a refinement of the present invention the computer-implemented method further comprises the prior steps providing a parser with the source code of the function, destructing the provided source code and forwarding the syntactic structure. In the step of providing the parser with the source code, the parser is provided with the source code of the function. In the step of destructing the provided source code into a syntactic structure by the parser, the provided source code is destructed into the syntactic structure by the parser. Thereby, the source code is destructed into different nodes each representing one entity of the function contributing to the resource consumption of the function. In the step of forwarding the syntactic structure, the syntactic structure is forwarded to the prediction module.

The parser may be part of a separate data processing system than the prediction module. The syntactic structure may be generated by an external system and imported to the data processing system comprising the prediction module. Alternatively, the parser and the prediction module may be comprised by the same data processing system and directly communicate with each other. The source code may be provided to the parser as a source code file of the function.

In the step of destructing the provided source code into the syntactic structure the parser may destruct the provided source code into an AST or any other syntactic structure. The parser may be an acorn.js parser (like available under www.astexplorer.com). In an AST the source code is destructed into nodes each having a different type of node like "Break-Statement", "ContinueStatement", "DebuggerStatement", "DoWhileStatement", "IfStatement", "ReturnStatement", "SwitchStatement", "SwitchCase", "ThrowStatement", "Identifier", "CatchClause", "TryStatement", "VariableDeclaration", "WhileStatement", "EmptyStatement", "LabeledStatement", "ExpressionStatement", "BlockStatement", "ForStatement", "AssignmentPattern", "ForInStatement", "ForOfStatement", "VariableDeclarator", "FunctionDeclaration", "FunctionExpression", "MethodDefinition", "ClassDeclaration", "ClassExpression", "MethodDefinition", "ExportAllDeclaration", "ExportDefaultDeclaration", "ExportNamedDeclaration", "ExportSpecifier", "ImportDeclaration", "ImportDefaultSpecifier", "Import-NamespaceSpecifier", "ImportSpecifier", "ExpressionStatement" and the like as for example given under https://github.com/acornjs/acorn/blob/a53faf52aa79c8aa87e276e e8dc941ac0cc20c94/acorn/src/statement.js. These nodes each represent one entity of the function contributing to the resource consumption of the function.

In the step of forwarding the syntactic structure, the generated syntactic structure is forwarded to the prediction module (e.g. of another data processing system).

The syntactic structure generated by the parser contains the nodes which each contribute to the resource consumption of the function. Consequently, by destructing the source code of the function for which the resource consumption is to be predicted into the syntactic structure the prediction module can be provided very efficiently with the necessary input data for precisely predicting said resource consumption.

According to a refinement of the present invention, in the step of determining the weights, the weights for each node are determined based on a respective type of node and/or a respective position within the syntactic structure.

Each type of node has different requirements regarding resource consumption (e.g. amount of memory and computing power of a processing unit). For example, a node of the type "operation" may use more computing power and less amount of memory, while a node of the type "declaration" may use less computing power but more amount of memory. Thus, the types of node of each of the nodes in the syntactic structure of the function form basis for a precise prediction of the total resource consumption of the function when executed.

The positions of each node within the syntactic structure form a "node flow" of the syntactic structure. The weight of a node differs, even within one type of node, depending inter alia on the position of the respective node in the syntactic structure and/or on the occurrence of other nodes (e.g. execution within a try-catch block might have different runtime behaviour when outside of such a block). Thus, the position within the syntactic structure of each of the nodes in the syntactic structure of the function form basis for a precise prediction of the total resource consumption of the function when executed.

Consequently, with the weights determined based on their respective type of node and/or position within the syntactic structure the preciseness of the prediction of the resource consumption can be further increased.

According to a refinement of the present invention, in the step of determining the weights, the weights for each node are determined based on at least one predefined hardware system.

The prediction module is configured to determine the weights based on a predefined hardware system (data processing unit). A function and in particular the different nodes of the syntactic structure of the (source code of the) function have a different consumption of resources, in particular amount of memory and computing power, depending on the hardware system/data processing system the function is executed on. For example a certain node of the type "operation" may use more computing power on a CPU than on a GPU. Thus, for a hardware system having a GPU the weight of this certain node is smaller than for a hardware system having a CPU.

Consequently, considering the hardware system/data processing system on which the function is to be executed in determining the weights for the nodes leads to a more precise prediction of the resource consumption (for the predefined hardware system) .

According to a refinement of the present invention the prediction module comprises a Machine Learning system (ML) or a Neural Network (NN) and the step of determining the weights and the step of predicting the resource consumption are executed by the ML or the NN. Thereby, the ML or the NN has been trained on determining weights for nodes in syntactic structures.

NNs or Artificial Neural Networks (ANN) are systems, in particular computing systems, inspired by biological neural networks that constitute animal brains. ANNs "learn" to perform tasks by considering (labelled) examples or training data, generally without being designed with any task-specific rules. During an initial learning or training phase ANNs automatically generate identifying characteristics from the (labelled) training data. ANNs comprise a collection of connected nodes called artificial neurons, which loosely model the neurons in a biological brain. Each connection (synapses in the biological brain) can transmit a signal from one node to another. A node that receives a signal can process it and then signal to subsequent neurons connected to it. In common ANN implementations, the signal at a connection between nodes is a real number (e.g. 0...1), and the output of each artificial neuron is computed by some non-linear function of the sum of its inputs (from other nodes). The connections between nodes are called "edges". The edges in ANNs may each have a weight that is adjusted during training of the ANNs. The weight increases or decreases the strength of the signal at the corresponding edge. Nodes may each have a threshold such that the signal is only sent if an aggregate signal exceeds that threshold. Typically, nodes are aggregated into layers. Different layers may perform different kinds of transformations on their inputs. Signals travel from a first layer or input layer to a last layer or output layer, possibly after traversing the layers multiple times.

In other words, an ANN is a network of simple elements, the so called nodes or artificial neurons, which receive input. After receiving input the nodes change their internal state (activation) according to that input, and produce output depending on the input and activation. The network forms by connecting the output of certain nodes to the input of other nodes forming a directed, weighted graph. The weights as well as the functions that compute the activation of each node can be modified during initial learning / training, which is governed by a learning rule or paradigm.

A node receiving an input from at least one predecessor neuron consists of the following components: an activation, the node's state, depending on a discrete time parameter, optionally a threshold, which stays fixed unless changed by a learning / training function, an activation function (e.g. hyperbolic tangent function, sigmoid function, softmax function, rectifier function etc.) that computes the new activation at a given time and the net input and an output function computing the output from the activation (often the output function is the identity function). An important characteristic of the activation function is that it provides a smooth transition as input values change, i.e. a small change in input produces a small change in output.

An input node has no predecessor but serves as input interface for the whole ANN. Similarly an output node has no successor and thus serves as output interface of the whole ANN. An ANN consists of edges / connections, each edge transferring the output of a node (predecessor) to the input of another, succeeding node (successor). Additionally to the assigned weight an edge may have a bias term added to a total weighted sum of inputs to serve as a threshold to shift the activation function. The propagation function computes the input to the succeeding node (successor) from the outputs of preceding nodes (predecessors) and may include the bias value.

Here, the ML or the NN is trained to determine the weights for each node of the syntactic structure, which syntactic structure is an input to the ML or the NN. The ML or the NN may further be trained to determine the weights of the nodes for different hardware systems or one predefined hardware system, which predefined hardware system may be a further input to the ML or the NN. Based on the weights for each node the ML or the NN then predicts the resource consumption of the function (executed on the predefined hardware system).

Further, the precision of predicting the hardware consumption by the ML or the NN may be increased over time as the predictions made by the ML or the NN can be "re-fed" to the ML or the NN as training data together with a measured actual resource consumption of the function when executed on a real hardware system.

Using a ML or a NN, consequently, offers a very precise and versatile prediction module, which is capable of precisely predicting the hardware consumption of different functions on different hardware systems.

According to a further refinement of the present invention the types of node comprise at least one of imports, declarations, operations and control flow.

The types of node "import", "declaration", "operation" and "control flow" are the most important types of node as they cover the most basic and relevant entities contributing to the total consumption of resources of any function. Thus, a syntactic structure at least or rather only comprising nodes of one of said types of nodes offers a very detailed, yet lean representation of the function for precisely determining the resource consumption of the function.

Consequently, the resource consumption can be predicted very precisely, while the syntactic structure is very lean and, thus, data-un-intensive such that less memory is consumed by the syntactic structure. Further, the destructing of the function into the syntactic structure can be executed faster.

According to a refinement of the present invention, in the step of predicting, a level of uncertainty of the predicted resource consumption is calculated.

Some nodes may have a certain uncertainty. For example it can be unknown how many times a loop is iterated upfront in case the stop criterion is not predefined. Further, the size of a string variable may be unknown upfront in case the string has a variable input length. Consequently, such uncertainty is typical due to lack of information before the actual execution/run-time of the function. Each node having such uncertainty, which results in an uncertainty of the total resource consumption of the function when executed, may be identified and its level of uncertainty, for example a confidence value (e.g. from 0% [Per cent], in case the resource consumption is completely uncertain, to 100%, in case the resource consumption is completely certain) may be considered by the prediction module in predicting the resource consumption of the function. The prediction module, therefore, calculates a level of uncertainty based on nodes having an uncertainty regarding resource consumption.

The prediction module may further generate a warning in case the calculated level of uncertainty is higher than a predefined threshold.

Consequently, the predicted resource consumption may be extended by the calculated uncertainty such that eventually deviations from the predicted resource consumption during real execution of the function can be accounted for in advance more reliably.

According to a refinement of the present invention the computer-implemented method further comprises at least one of the steps providing the prediction module with at least one user assumption and/or at least one gate and providing the prediction module with at least one hardware configuration and/or at least one set of performance characteristics. Thereby, in the step of determining, the determining of the weights is additionally based on the provided at least one user assumption and /or the at least one gate and/or provided the at least one hardware configuration and/or the at least one set of performance characteristics.

User assumptions are "typical values" for (input) variables or return values from external calls of the function. If, for example, the input is a text and a for-each loop depends on the length of the text, a user could provide a user assumption on the typical length for a string. Thus, user assumptions are common values for uncertain values of the function.

A gate, in contrast, is a hard boundary (not just a common value) for an unknown value of the function. For example, a certain numerical value of the function is always in the range of 0..10 or external database returns include maximally 25 hits. Thus, gates define (upper and/or lower) limits for values.

The user assumptions and/or gates can be used in predicting the resource consumption of the function for achieving a higher certainty or rather lower uncertainty of the predicted resource consumption.

The provided hardware configuration is a predefined combination of hardware of a hardware system on which the function is to be run. The provided hardware configuration may, for example, at least comprise an available amount and type of memory for executing the function and an available number of processing units and their computing power for executing the function.

The provided set of performance characteristics is a set of values for important performance parameters. The provided set of performance characteristics may at least comprise an available size of memory and an available computing power.

In the step of determining, the weights are determined by the prediction unit additionally based on the at least one provided user assumption and /or at least one gate and/or the at least one provided hardware configuration and/or the at least one set of performance characteristics. Thus, the predicted resource consumption of the function has a higher certainty or rather lower uncertainty.

Further, in case the predicted resource consumption of the function has a too high level of uncertainty, the user can, eventually after explicit warning and/or prompting by the prediction module, provide at least one user assumption and /or at least one gate and/or the at least one hardware configuration and/or at least one set of performance characteristics

Consequently, the predicted resource consumption of the function is more reliable due to the reduced level of uncertainty.

According to a refinement of the present invention the computer-implemented method further comprises the step calculating an execution time. In the step of calculating the execution time, the execution time for the function is calculated based on the predicted resource consumption and optionally based on the at least one provided hardware configuration and/or the at least one set of performance characteristics.

The execution time of the function may be an absolute time (wall clock) giving the duration from a start time to an end time of the execution of the function and/or a CPU time, which only gives the time during which at least one processing unit was actually actively computing from the start time to the end time of the execution of the function and/or an idle time, which gives the time where no processing unit was actually actively computing from the start time to the end time of the execution of the function.

The execution time may be computed based on the predicted resource consumption. Further, the execution time may be computed based on a predefined hardware system (the at least one provided hardware configuration and/or the at least one set of performance characteristics) the function is to be executed on. Moreover, the execution time may be calculated by the prediction module and in particular by the ML or the NN.

The execution time may be calculated via a correlation like a (linear) function, a look up table etc.

According to a refinement of the present invention the computer-implemented method further comprises the step calculating a price. In the step of calculating the price, the price for executing the at least one function is calculated based on the predicted resource consumption and/or the calculated execution time and optionally based on the at least one provided hardware configuration and/or the at least one set of performance characteristics.

The price may be a value in a predefined currency, which gives the predicted amount of money the execution of the function will cost.

The price may be computed based on the predicted resource consumption. Further, the price may be computed based on the hardware system (or rather the at least one provided hardware configuration and/or the at least one set of performance characteristics) the function is to be executed on. Moreover, the price may be calculated by the prediction module and in particular by the ML or the NN.

The price may be calculated via a correlation like a (linear) function, a look up table etc.

According to a fifth aspect of the present invention a computer-implemented method of training a ML or a NN for determining weights for nodes of syntactic structures of functions and for predicting resource consumption of the functions comprises the steps providing a training data set and training the ML or the NN. In the step of providing the training data set, the training data set is provided. The provided training data set comprises a set of training syntactic structures and corresponding training resource consumptions and/or corresponding training execution times and optionally a set of training hardware configurations and/or sets of training performance characteristics. In the step of training the ML or the NN, the ML or the NN is trained using the training data set. Thereby the set of training syntactic structures and optionally the set of training hardware configurations and/or sets of training performance characteristics are used as input to the ML or the NN. The corresponding training resource consumptions and/or corresponding training execution times are used as target goals for the ML or the NN.

According to a sixth aspect of the present invention a computer program comprises instructions which, when the program is executed by a computer, cause the computer to carry out the steps of the method according to the fifth aspect of the present invention.

According to a seventh aspect of the present invention a computer-readable medium has stored thereon the computer program according to the sixth aspect of the present invention.

According to an eighth aspect of the present invention a data processing system comprises means for carrying out the steps of the method according to the fifth aspect of the present invention.

A learning or rather training rule or paradigm is an algorithm which modifies the parameters of a respective ML or NN/ANN, in order for a given input to the ML or NN/ANN to produce a favoured output. This training typically amounts to modifying the weights and thresholds of the variables within the ML or NN/ANN. Given a specific task to solve and a class of functions, learning means using a set of observations to find the one function of the class of functions, which solves the task in some optimal sense. This entails defining a cost function such that for the optimal solution the cost is minimal and no other solution has a cost less than the cost of the optimal solution. The cost function is an important concept in learning, as it is a measure of how far away a particular solution is from an optimal solution to the problem to be solved. Learning algorithms search through the solution space to find a function that has the smallest possible cost. For applications where the solution is data dependent, the cost must necessarily be a function of the observations, otherwise the model would not relate to the data. It is frequently defined as a statistic to which only approximations can be made. It is possible to define an arbitrary cost function, however, a particular cost function may be used either because it has desirable properties (e.g. convexity) or because it arises naturally from a particular formulation of the problem.

An ML or NN/ANN can be discriminatively trained with a standard backpropagation algorithm. Backpropagation is a method to calculate the gradient of a loss function (produces the cost associated with a given state) with respect to the weights in the ANN. The weight updates of backpropagation can be done via stochastic gradient descent. The choice of the cost function depends on factors such as the learning type (e.g. supervised, unsupervised, reinforcement etc.) and the activation function. Commonly, the activation function and cost function are the softmax function and cross entropy function, respectively.

In other words, training a ML or a NN/ANN essentially means selecting one model from the set of allowed models (or, in a Bayesian framework, determining a distribution over the set of allowed models) that minimizes the cost. Commonly some form of gradient descent is deployed, using backpropagation to compute the actual gradients. This is done by simply taking the derivative of the cost function with respect to the network parameters and then changing those parameters in a gradient-related direction. Backpropagation training algorithms fall into three categories: steepest descent (with variable learning rate and momentum, resilient backpropagation), quasi-Newton (Broyden-Fletcher-Goldfarb-Shanno, one step secant), Levenberg-Marquardt and conjugate gradient (Fletcher-Reeves update, Polak-Ribiere update, Powell-Beale restart, scaled conjugate gradient).

Common training paradigms include supervised learning, unsupervised learning and reinforcement learning. Supervised learning uses a set of example pairs and the aim is to find a function in the allowed class of functions that matches the examples. In other words, the mapping implied by the data is inferred; the cost function is related to the mismatch between the mapping of the ANN and the data and it implicitly contains prior knowledge about the problem domain. The cost may be the mean-squared error, which tries to minimize the average squared error between the ANN's output and a target value over all the example pairs. Minimizing this cost using gradient descent for the class of ANNs called multilayer perceptrons (MLP), produces the backpropagation algorithm for training ANNs. In unsupervised learning, some data is given and the cost function to be minimized that can be any function of the data and the ANN's output. The cost function is dependent on the task and any a priori assumptions (e.g. implicit properties or parameters of the model, observed variables etc.). In reinforcement learning, data is usually not given, but generated by an agent's interactions with the environment. At each point in time the agent performs an action and the environment generates an observation and an instantaneous cost according to some (usually unknown) dynamics. The aim is to discover a policy for selecting actions that minimizes some measure of a long-term cost, e.g. the expected cumulative cost. The environment's dynamics and the long-term cost for each policy are usually unknown, but may also be estimated. The environment is commonly modelled as a Markov decision process (MDP) with states and actions with the following probability distributions: the instantaneous cost distribution, the observation distribution and the transition, while a policy is defined as the conditional distribution over actions given the observations. Taken together, the two then define a Markov chain (MC). The aim is to discover the policy (i.e., the MC) that minimizes the cost.

Here, the ML or the NN is trained by providing at least the training syntactic structures as input to the ML or the NN and optimizing until the corresponding training resource consumptions and/or execution times are reached. The accordingly trained ML or NN can predict the resource consumption of a function based on the syntactic structure of the respective function. The ML or the NN may be trained based on a set of training data comprising at least 1000 sets of training syntactic structures and corresponding training resource consumptions and/or corresponding training execution times and optionally sets of training hardware configurations and/or sets of training performance characteristics.

Further, the ML or the NN can be further trained or rather refined by "re-feeding" syntactic structures of functions for which the resource consumption has already been predicted by the NN and optimizing until an actual resource consumption, which has been measured on the hardware system/data processing system on which the respective function was actually executed, is reached.

In particular, the ML may be trained by means of a Linear Regression optimisation.

Consequently, the ML or the NN trained according to the present invention fast and reliably predicts the resource consumption of a function.
According to a refinement of the present invention the data processing system according to the fourth aspect of the present invention for carrying out the steps of the method according to the first aspect of the present invention further comprises a ML or a NN that was trained with the computer-implemented method of training according to the fifth aspect of the present invention.

The present invention and its technical field are subsequently explained in further detail by exemplary embodiments shown in the drawings. The exemplary embodiments only conduce better understanding of the present invention and in no case are to be construed as limiting for the scope of the present invention. Particularly, it is possible to extract aspects of the subject-matter described in the figures and to combine it with other components and findings of the present description or figures, if not explicitly described differently. Equal reference signs refer to the same objects, such that explanations from other figures may be supplementally used.
- In FIG 1: a schematic flow chart of the computer-implemented method according to the first aspect of the present invention is shown.
- In FIG 2: a schematic flow chart of the computer-implemented method according to the fifth aspect of the present invention is shown.
- In FIG 3: a schematic view of the computer-readable medium according to the third aspect of the present invention is shown.
- In FIG 4: a schematic view of the data processing system according to the fourth aspect of the present invention is show.
- In FIG 5: a schematic view of a further embodiment of the data processing system of FIG 4 is shown.

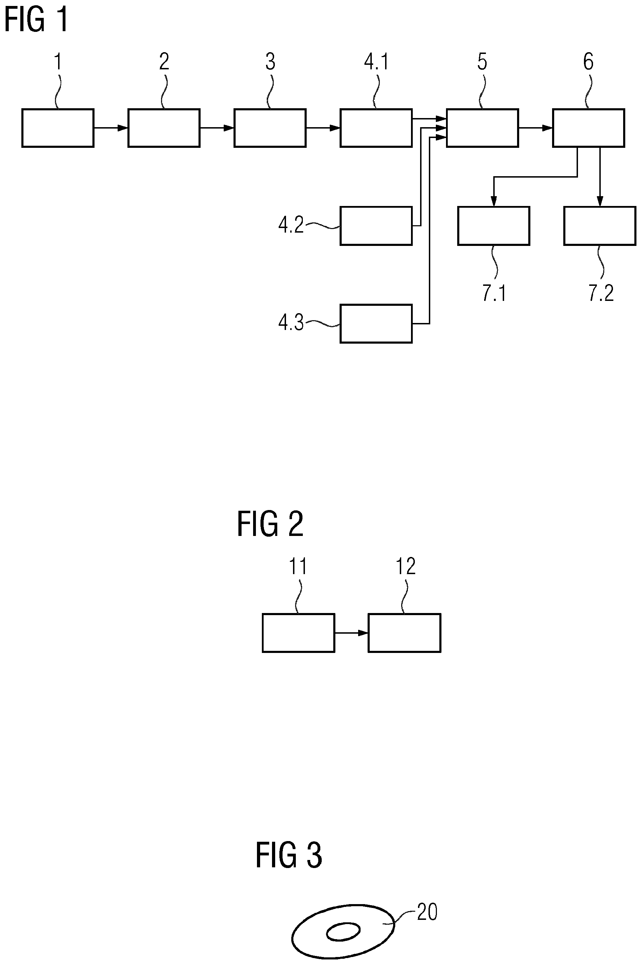

FIG 1 schematically depicts the computer-implemented method according to the first aspect of the present invention. The depicted method steps correspond to program steps of the computer program according to the second aspect of the present invention. The computer-implemented method (or the computer program) of predicting a resource consumption of functions comprises the steps providing 4.1 a prediction module with a syntactic structure, determining 5 weights and predicting 6 the resource consumption and the optional prior steps providing 1 a parser with the source code of the function, destructing 2 the provided source code and forwarding 3 the syntactic structure and the optional steps providing 4.2 the prediction module with at least one user assumption and/or at least one gate, providing 4.3 the prediction module with at least one hardware configuration and/or at least one set of performance characteristics, calculating 7.1 an execution time and calculating 7.2 a price.

In the step of providing 1 the parser with the source code, the parser is provided with the source code of the function. An exemplary source code of a function in JavaScript may be:

```
     import {test} from 'somemodule';
     function printNumbers() {
          let tips = [1,5,6,8];
          tips.forEach((n, i) => console.log("Numbers: ${i}:
     + n));
     }
```

In the step of destructing 2 the provided source code into a syntactic structure by the parser, the provided source code is destructed into the syntactic structure by the parser. Thereby, the source code is destructed into different nodes each representing one entity of the function contributing to the resource consumption of the function. Here the syntactic structure of the JavaScript function may be an AST of the JavaScript function, like for example:

```
     {
       "type": "Program",
       "body": [
         {
           "type": "ImportDeclaration",
           "specifiers": [
             {
               "type": "ImportSpecifier",
               "imported": {
                 "type": "Identifier",
                 "name": "test"
               },
               "local": {
                 "type": "Identifier",
                 "name": "test"
               }
             }
           ],
           "source": {
             "type": "Literal",
             "value": "somemodule",
             "raw": "'somemodule'"
           }
         },
         {
           "type": "FunctionDeclaration",
           "id": {
             "type": "Identifier",
           },"name": "printNumbers"
           "expression": false,
           "generator": false,
           "params": [],
           "body": {
             "type": "BlockStatement",
             "body": [
               {
                 "type": "VariableDeclaration",
                 "declarations": [
                    {
                      "type": "VariableDeclarator",
                      "id": {
                        "type": "Identifier",
                      },"name": "tips"
                      "init": {
                        "type": "ArrayExpression",
                        "elements": [
                          {
                            "type": "Literal",
                            "value": 1,
                            "raw": "1"
                          },
     ...
```

In the step of forwarding 3 the syntactic structure, the syntactic structure is forwarded to the prediction module.

In the step of providing 4.1 the prediction module with the syntactic structure, the prediction module is provided with the syntactic structure (of the source code of the function) generated by the parser. The syntactic structure comprises the different nodes each representing one entity of the function contributing to the resource consumption of the function.

In the step of providing 4.2, the prediction module is provided with at least one user assumption and/or at least one gate.

In the step of providing 4.3, the prediction module is provided with at least one hardware configuration and/or at least one set of performance characteristics.

In the step of determining 5 the weights, the weights for each node in the provided syntactic structure (AST) are determined by the prediction module based on characteristics of the respective nodes. Thereby, in the step of determining 5 the weights, the weights are determined additionally based on the provided at least one user assumption and /or the at least one gate and/or provided the at least one hardware configuration and/or the at least one set of performance characteristics.

In the step of predicting 6 the resource consumption, the resource consumption of the function is predicted by the prediction module based on the nodes of the provided syntactic structure and the respective determined weights.

In the step of calculating 7.1 the execution time, the execution time for the function is calculated based on the predicted resource consumption and optionally based on the at least one provided hardware configuration and/or the at least one set of performance characteristics.

In the step of calculating 7.2 the price, the price for executing the at least one function is calculated based on the predicted resource consumption and/or the calculated execution time and optionally based on the at least one provided hardware configuration and/or the at least one set of performance characteristics.

FIG 2 schematically depicts the computer-implemented method according to the fifth aspect of the present invention. The computer-implemented method of training a ML or a NN for determining weights for nodes of syntactic structures of functions and for predicting resource consumption of the functions comprises the steps providing 11 a training data set and training 12 the ML or the NN.

In the step of providing 11 the training data set, the training data set is provided. The provided training data set comprises a set of training syntactic structures and corresponding training resource consumptions and/or corresponding training execution times and optionally a set of training hardware configurations and/or sets of training performance characteristics.

In the step 12 of training the ML or the NN, the ML or the NN is trained using the training data set. Thereby the set of training syntactic structures and optionally the set of training hardware configurations and/or sets of training performance characteristics are used as input to the ML or the NN. The corresponding training resource consumptions and/or corresponding training execution times are used as target goals for the ML or the NN.

In FIG 3 the computer-readable medium 20 according to the third aspect of the present invention is schematically depicted.

Here, exemplarily a computer-readable storage disc 20 like a Compact Disc (CD), Digital Video Disc (DVD), High Definition DVD (HD DVD) or Blu-ray Disc (BD) has stored thereon the computer program according to the second aspect of the present invention and as schematically shown in Figs. 1 to 3. However, the computer-readable medium may also be a data storage like a magnetic storage/memory (e.g. magnetic-core memory, magnetic tape, magnetic card, magnet strip, magnet bubble storage, drum storage, hard disc drive, floppy disc or removable storage), an optical storage/memory (e.g. holographic memory, optical tape, Tesa tape, Laserdisc, Phasewriter (Phasewriter Dual, PD) or Ultra Density Optical (UDO)), a magneto-optical storage/memory (e.g. MiniDisc or Magneto-Optical Disk (MO-Disk)), a volatile semiconductor/solid state memory (e.g. Random Access Memory (RAM), Dynamic RAM (DRAM) or Static RAM (SRAM)), a non-volatile semiconductor/solid state memory (e.g. Read Only Memory (ROM), Programmable ROM (PROM), Erasable PROM (EPROM), Electrically EPROM (EEPROM), Flash-EEPROM (e.g. USB-Stick), Ferroelectric RAM (FRAM), Magnetoresistive RAM (MRAM) or Phase-change RAM).

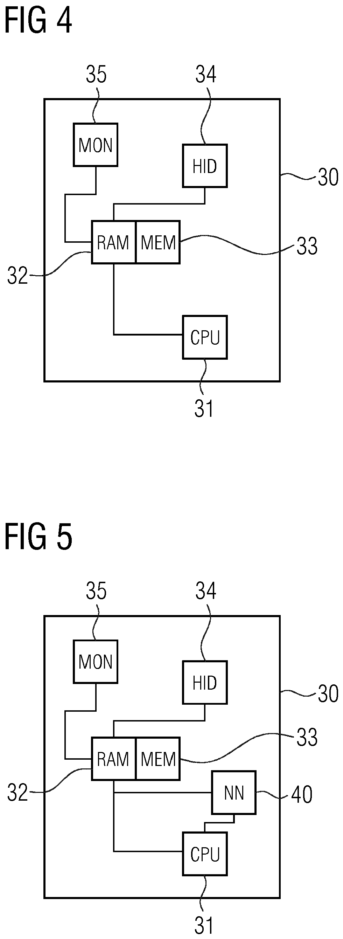

In FIG 4 the data processing system 30 according to the fourth aspect of the present invention is schematically depicted.

The data processing system 30 may be a personal computer (PC), a laptop, a tablet, a server, a distributed system (e.g. cloud system) and the like. The data processing system 30 comprises a central processing unit (CPU) 31, a memory having a random access memory (RAM) 32 and a non-volatile memory (MEM, e.g. hard disk) 33, a human interface device (HID, e.g. keyboard, mouse, touchscreen etc.) 34 and an output device (MON, e.g. monitor, printer, speaker, etc.) 35.

The CPU 31, RAM 32, HID 34 and MON 35 are communicatively connected via a data bus. The RAM 32 and MEM 33 are communicatively connected via another data bus. The computer program according to the second aspect of the present invention and schematically depicted in FIG 1 can be loaded into the RAM 32 from the MEM 33 or another computer-readable medium 20.

According to the computer program the CPU executes the steps 1 to 7.2 of the computer-implemented method according to the first aspect of the present invention and schematically depicted in FIG 1. The execution can be initiated and controlled by a user via the HID 34. The status and/or result of the executed computer program may be indicated to the user by the MON 35. The result of the executed computer program may be permanently stored on the non-volatile MEM 33 or another computer-readable medium.

In particular, the CPU 31 and RAM 32 for executing the computer program may comprise several CPUs 31 and several RAMs 32 for example in a computation cluster or a cloud system. The HID 34 and MON 35 for controlling execution of the computer program may be comprised by a different data processing system like a terminal communicatively connected to the data processing system 30 (e.g. Cloud system).

In FIG 5 a further embodiment of the data processing system of FIG 4 is schematically depicted.

Here the data processing system 30 further comprises a ML or NN (40). The ML or the NN (40) may have been trained with the computer-implemented method according to FIG 2. The ML or the NN (40) can execute the steps of determining 5 the weights and predicting 6 the resource consumption according to FIG 1.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In the foregoing detailed description, various features are grouped together in one or more examples for the purpose of streamlining the disclosure. It is understood that the above description is intended to be illustrative, and not restrictive. It is intended to cover all alternatives, modifications and equivalents as may be included within the scope of the invention. Many other examples will be apparent to one skilled in the art upon reviewing the above specification.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects. In the context of the present description and claims the conjunction "or" is to be understood as including ("and/or") and not exclusive ("either ... or") .

## Claims

1. Computer-implemented method of predicting a resource consumption of functions, comprising the steps:
- providing (1) a prediction module with a syntactic structure of a source code of a function, where the syntactic structure comprises different nodes each representing one entity of the function contributing to the resource consumption of the function;
- determining (2) weights for each node in the provided syntactic structure by the prediction module based on characteristics of the respective nodes;
- predicting (3) the resource consumption of the function by the prediction module based on the nodes of the provided syntactic structure and the respective determined weights.

2. Computer-implemented method according to claim 1, further comprising the prior steps:
- providing (1) a parser with the source code file of a function;
- destructing (2) the provided source code into a syntactic structure by the parser, where the source code is destructed into different nodes each representing one entity of the function contributing to the resource consumption of the function; and
- forwarding (3) the syntactic structure to the prediction module.

3. Computer-implemented method according to claim 1 or 2, wherein, in the step of determining (5) the weights, the weights for each node are determined based on a respective type of node and/or a respective position within the syntactic structure.

4. Computer-implemented method according to any preceding claim, wherein, in the step of determining (5) the weights, the weights for each node are determined based on at least one predefined hardware system.

5. Computer-implemented method according to any preceding claim, wherein the prediction module comprises a Machine Learning system, ML, or a Neural Network, NN, (40) and the step of determining (5) the weights and the step of predicting (6) the resource consumption are executed by the ML or the NN (40), where the ML or the NN (40) has been trained on determining weights for nodes in syntactic structures.

6. Computer-implemented method according to any of claims 3 to 5, wherein the types of node comprise at least one of imports, declarations, operations and control flow.

7. Computer-implemented method according to any preceding claim, wherein in the step of predicting (6) the resource consumption, a level of uncertainty of the predicted resource consumption is calculated.

8. Computer-implemented method according to any preceding claim, further comprising at least one of the steps:
- providing (4.2) the prediction module with at least one user assumption and/or a gate; and
- providing (4.3) the prediction module with at least one hardware configuration and/or at least one set of performance characteristics,
wherein, in the step of determining (5) the weights, the determining of the weights is additionally based on the provided at least one user assumption and/or at least one gate and/or the provided at least one hardware configuration and/or the at least one set of performance characteristics.

9. Computer-implemented method according to any preceding claim, further comprising the step:
- calculating (7.1) an execution time for the function based on the predicted resource consumption and optionally based on the at least one provided hardware configuration and/or the at least one set of performance characteristics.

10. Computer-implemented method according to any preceding claim, further comprising the step:
- calculating (7.2) a price for executing the at least one function based on the predicted resource consumption and/or the calculated execution time and optionally based on the at least one provided hardware configuration and/or the at least one set of performance characteristics.

11. Computer-implemented method of training a ML or a NN (40) for determining weights for nodes of syntactic structures of functions and for predicting resource consumption of the functions, comprising the steps:
- providing (11) a training data set, comprising a set of training syntactic structures and corresponding training resource consumptions and/or corresponding training execution times and optionally a set of training hardware configurations and/or sets of training performance characteristics; and
- training (12) the ML or the NN (40) using the training data set, wherein the set of training syntactic structures and optionally a set of training hardware configurations and/or sets of training performance characteristics are used as input to the ML or the NN (40) and the corresponding training resource consumptions and/or corresponding training execution times are used as target goals for the ML or the NN (40).

12. Computer program comprising instructions which, when the program is executed by a computer, cause the computer to carry out the steps of the method according to any of claims 1 to 10.

13. Computer-readable medium (20) having stored thereon the computer program according to claim 12.

14. Data processing system (30) comprising means (31, 32) for carrying out the steps of the method according to any of claims 1 to 10.

15. Data processing system (30) according to claim 14 for carrying out the steps of the method according to any of claims 5 to 10, further comprising a ML or a NN (40) that was trained with the computer-implemented method of training according to claim 11.
